# EUROPEAN PATENT APPLICATION

(11) **EP 3 471 039 A1**
(43) Date of publication of application: **17.04.2019**
(21) Application number: 18194836.5
(22) Date of filing: 17.09.2018
(51) Int. Cl.: G06Q 20/32, G06Q 20/40

(54) **PERSONAL POINT OF SALE (PPOS) WITH DYNAMIC PAYMENT KERNEL CONFIGURATION FOR CARD PRESENT E-COMMERCE AND IN VEHICLE TRANSACTION**

(30) Priority: 13.10.2017 US 201715783876
(71) Applicant: NXP B.V., 5656 AG Eindhoven (NL)
(72) Inventor: NUZUM, Todd Raymond, 5656 AG Eindhoven (NL); DOW, Michael, 5656 AG Eindhoven (NL); OCASIO, Eric Michael, 5656 AG Eindhoven (NL)
(74) Representative: Krott, Michel

(57) **Abstract**

Today, merchant Point of Sale (POS) systems can be certified by the merchant acquirers for Level 3 with a certified EMV Level 1 contact and contactless reader. The EMV Level 2 payment kernel is configured to meet the merchant's requirements based on the rules the merchant sets in the payment kernel. These rules and parameters are static. The present specification discloses a personal POS (pPOS) device and method, where different merchants can use the same customer pPOS hardware by changing the configuration of the payment kernel to their rules prior to processing the payment. Therefore, the present specification discloses devices and methods that can process payment transactions using a payment kernel that is dynamically configurable.

## Description

### CROSS REFERENCE TO RELATED APPLICATIONS

This application is related to U.S. Patent Application No. 15/344,508, entitled "PERSONAL POINT OF SALE (PPOS) DEVICE THAT PROVIDES FOR CARD PRESENT E-COMMERCE TRANSACTION" filed on November 4, 2016, U.S. Patent Application No. 15/462,904, entitled "PERSONAL POINT OF SALE (PPOS) DEVICE WITH A LOCAL AND/OR REMOTE PAYMENT KERNEL THAT PROVIDES FOR CARD PRESENT E-COMMERCE TRANSACTION" filed on March 19, 2017, and U.S. Patent Application No. 15/627,406, entitled "MERCHANT AUTHENTICATION TO VEHICLE BASED PERSONAL POINT OF SALE (PPOS) DEVICE THAT PROVIDES FOR CARD PRESENT E-COMMERCE TRANSACTION" filed on June 19, 2017.

### FIELD

The described embodiments relate generally to devices and methods that provide for e-commerce transactions and/or in vehicle merchant payments, and more particularly to personal Point of Sale (pPOS) devices and methods with dynamic payment kernel configuration that provide for card present e-commerce transactions and/or in vehicle merchant payments.

### BACKGROUND

Today e-commerce transactions are processed as "card not present". This means the customer has to enter their card account number, printed security features on the card like CVC/CVC2 (card verification code/card validation code). This data is used and stored by the merchant to make the payment. This is customer PCI (Payment Card Industry) data. The merchant also pays a higher interchange rate because of the type of fraud which is possible because the data is exposed in the transaction and at the merchant web site.

As for "card present" payments from a vehicle, car, or motorcycle, they are made either by handing your credit or debit card to the merchant to make a payment or using a RF (radio frequency) transponder in your car for drive through or drive by payments.

There are advantages to improving these "card present" e-commerce transactions and "card present" in vehicle payments, by reducing the merchant cost and fraud, as well as improving payment speed. Therefore, it is desirable to have devices and methods that can provide for "card present" e-commerce transactions and "card present" in vehicle payments that are more secure, faster, and cheaper for card users and merchants.

### SUMMARY

Within the EMV payment specification, the use of an unattended terminal to accept a payment is allowed. (Note: EMV stands for Europay, MasterCard, and Visa.) Creating a device that has both the EMV level 1 (L1) and level 2 (L2) payment components combined with a virtual merchant creates a "card present" transaction for an on-line or e-commerce merchant. This device can be called a personal Point of Sale (pPOS). When this pPOS device is in or on a customer's vehicle, "card present" payment transactions can also be processed from the vehicle, for drive by or drive through payments. In some embodiments, the present specification discloses systems and methods that can process these payment transactions using a payment kernel that is dynamically configurable. In some embodiments, the present specification discloses systems and methods that can provide the ability to change the payment kernel application and terminal parameters prior to processing a payment transaction for an unattended terminal based on the merchant, transaction type, dollar amount, customer verification method (CVM), fraud rules, and velocity checks.

Today, merchant Point of Sale (POS) systems can be certified by the merchant acquirers for Level 3 with a certified EMV level 1 contact and contactless reader. The EMV Level 2 payment kernel is configured to meet the merchant's requirements based on the rules the merchant sets in the payment kernel. These rules and parameters are static. In the case for a personal POS (pPOS), different merchants can use the same customer pPOS hardware by changing the configuration of the payment kernel to their rules prior to processing the payment.

In some embodiments, the present specification discloses systems and methods that can set the merchant payment processing parameters on the device in the secure element and secure microcontroller function (MCF), and not only based on the issuers payment application. The use of a secure MCF is to manage the transaction and adjust up to more advanced or complicated customer verification method that the device can support.

In some embodiments, the present specification discloses systems and methods that can provide the ability to manage the EMV Level 2 payment kernel either locally on the device or cloud based for a personal POS. Management includes setting merchant processing rules, payment configurations, payment application parameters, CVM validation rules, on device CVM capabilities, terminal risk levels, encryption keys, velocity checks, transaction process logging, and receipts.

The present specification discloses systems and methods that can provide the following features:
(1) Merchant website or application can pass session data to the payment kernel in the device prior to processing the payment transaction being executed by the customer;
(2) Merchant website or application can set the Cardholder Verification Method it will require by the customer;
(3) Cardholder Verification Method can be adjusted to the device capabilities;
(4) Session data can be session ID (identifier), product stock keeping unit (SKU), shopping card data, shopping cart data, products, price, customer verification methods on the reader, customer payment instrument, and customer type;
(5) Limit for "card present" contact or contactless payment can be changed based on customer and authentication of the customer to device CVM;
(6) Based on the success or failure of the processed payment, the merchant or terminal parameters and customer verification method can be updated, and the payment re-attempted again;
(7) The merchant website or application can set the processing rules for the individual customer based on the merchant processing rules, shopping cart data, products, price, customer verification methods on the device, customer payment instrument, and customer type;
(8) The merchant can set the fraud rules on the device and request prior transactions;
(9) Based on the merchant ID the device can create new Point to Point Encryption (P2PE) or End to End Encryption (E2EE) keys for a specific payment transaction for a specific merchant or merchant acquirer.

The present invention discloses a method for providing a personal point of sale (pPOS) for card present e-commerce transactions and/or in vehicle payments, the method comprising: (a) presenting a payment and/or identification instrument to a pPOS device; (b) authenticating and validating, by the pPOS device, a user, a merchant, a merchant acquirer, an issuer of the payment and/or identification instrument, wherein the authenticating and validating create a trusted link between the pPOS device and each of the following: the user, the merchant, the merchant acquirer, and the issuer of the payment and/or identification instrument; (c) processing, by the pPOS device, a payment transaction, wherein a payment kernel is dynamically configured for processing the payment transaction based on the following criteria: the user, the merchant, the merchant acquirer, a payment network, the payment instrument, and the identification instrument.

In some embodiments, the processing step is comprising of: payment transaction scoring of the user and the merchant, wherein data elements from the payment transaction, prior payment transaction history, and the payment and/or identification instrument are numerically analyzed by rules to determine a risk of fraud by the user or the merchant.

In some embodiments, the processing step is further comprising of: EMV chip on chip payment processing, wherein EMV stands for Europay, MasterCard, and Visa.

In some embodiments, the payment transaction scoring is based on one or more of the following: shopping usage pattern of the user, authentication method used by the merchant, merchant type of the merchant, usage pattern of the payment and/or identification instrument to the merchant, success or failure of payment transactions by the issuer of the payment and/or identification instrument, merchandise type of items in electronic shopping cart, and shopping cart checkout value and merchant type of the merchant.

In some embodiments, the authenticating and validating step is comprising of: comparing data elements locally stored on the pPOS device with both payment transaction data elements and/or external sensor data elements.

In some embodiments, the data elements are locally stored on the pPOS device, wherein the data elements are comprising of: user identification data elements, merchant identification data elements, and merchant acquirer identification data elements stored in a secure microcontroller function (MCF) and/or a secure element.

In some embodiments, the user identification data elements are comprising of one or more of the following: a face of the user, a finger of the user, a fingerprint of the user, an iris of the user, a voice of the user, a heart rhythm of the user, a physical attribute of the user, and any other biometric identifier of the user.

In some embodiments, the merchant identification data elements are comprising of one or more of the following: a merchant ID (identification), a merchant key pair, a merchant address, a merchant geolocation data, a merchant store image, a merchant logo and/or branding and/or trademark image, a merchant location RF (radio-frequency) and/or UHF (ultra-high frequency) identification, a merchant electronic shopping cart identification, and a merchant to user electronic shopping cart session identification.

In some embodiments, the merchant acquirer identification data elements are comprising of one or more of the following: a merchant acquirer ID (identification), a merchant acquirer key pair, a merchant acquirer Terminal ID (identification), and a merchant acquirer connection protocol and identifier.

In some embodiments, the method is further comprising: initializing, by the pPOS device, the payment kernel for processing the payment transaction.

In some embodiments, the initializing step is comprising of: defining rules and data elements for the payment transaction based on: whether this is a first time or recurring payment transaction from the same merchant, location of the merchant, external data, and the payment and/or identification instrument.

In some embodiments, the data elements for the payment transaction are comprising of one or more of the following: payment transaction date and time, payment transaction status, wherein the payment transaction status is comprising of success or failure with reason code, payment transaction merchant ID (identification), and payment transaction fraud score.

In some embodiments, the presenting step is comprising of: presenting, by the user, the payment and/or identification instrument to the pPOS device.

In some embodiments, the method is further comprising: displaying status of the payment transaction, and logging of the payment transaction.

In some embodiments, the displaying status of the payment transaction is comprising of one or more of the following: displaying status on a pPOS display, displaying status on an external audio device via an external user interface, and displaying status on an external display device via an external user interface.

In some embodiments, the logging of the payment transaction is comprising of one of the following: logging the payment transaction locally on the pPOS device, logging the payment transaction remotely from the pPOS device, logging the payment transaction both locally on and remotely from the pPOS device.

The present invention also discloses a method for providing a personal point of sale (pPOS) for card present e-commerce transactions and/or in vehicle payments, the method comprising: (a) using, by a pPOS device, external data from an external data sensor switch function to initiate a payment transaction; (b) authenticating and validating, by the pPOS device, a user, a merchant, a merchant acquirer, an issuer of the payment and/or identification instrument, wherein the authenticating and validating create a trusted link between the pPOS device and each of the following: the user, the merchant, the merchant acquirer, and the issuer of the payment and/or identification instrument; (c) processing, by the pPOS device, a payment transaction, wherein a payment kernel is dynamically configured for processing the payment transaction based on the following criteria: the user, the merchant, the merchant acquirer, a payment network, the payment instrument, and the identification instrument.

In some embodiments, the processing step is comprising of: payment transaction scoring of the user and the merchant, wherein data elements from the payment transaction, prior payment transaction history, and the payment and/or identification instrument are numerically analyzed by rules to determine a risk of fraud by the user or the merchant.

In some embodiments, the authenticating and validating step is comprising of: comparing data elements locally stored on the pPOS device with both payment transaction data elements and/or external sensor data elements.

In some embodiments, the external data used by the pPOS device is comprised of one or more of the following: WiFi (wireless local area network) communication, Bluetooth or Bluetooth low energy communication, NFMI (near field magnetic induction) communication, cellular communication, and V2X (vehicle-to-infrastructure and/or vehicle-to-vehicle) communication.

In some embodiments, the merchant creates a payment transaction event trigger based on processing a location data of the merchant, wherein the location data of the merchant is provided by the external data, wherein the payment transaction event trigger prompts the pPOS device for payment.

In some embodiments, the method is further comprising: initializing, by the pPOS device, the payment kernel for processing the payment transaction.

The present invention further discloses a device for providing a personal point of sale (pPOS) for card present e-commerce transactions and/or in vehicle payments, the device comprising: (a) a secure microcontroller function (MCF); and (b) a secure element, the secure element configured to store and process payment and identification application, wherein a payment kernel configured to process a payment transaction is local, remote, or split between local and remote to the device, wherein the payment kernel is dynamically configured for processing the payment transaction based on the following criteria: a user, a merchant, a merchant acquirer, a payment network, a payment instrument, and an identification instrument.

In some embodiments, the payment kernel is configured to support both local and/or remote execution of payment processing based on merchant and merchant acquirer rules.

In some embodiments, the device is further comprising of one or more of the following: (a) a reader, the reader configured to read the payment and/or identity instrument; (b) a sensor switch, the sensor switch configured to initiate and/or terminate a payment transaction; (c) a user interface function; and (d) an external data sensor switch function, the external data sensor switch function configured to validate, manage, and/or create payment transactions.

The present invention also discloses a device for providing a personal point of sale (pPOS) for card present e-commerce transactions and/or in vehicle payments, the device comprising: (a) a secure microcontroller function (MCF); (b) a secure element, the secure element configured to store and process payment and identification application; and (c) a payment kernel, the payment kernel configured to process payment, wherein the payment kernel is local to the device, wherein the payment kernel is dynamically configured for processing the payment transaction based on the following criteria: a user, a merchant, a merchant acquirer, a payment network, a payment instrument, and an identification instrument.

In some embodiments, the secure MCF and/or a second MCF is configured to perform I/O (input/output) functions.

In some embodiments, the secure MCF and/or the second MCF is configured to perform I/O (input/output) functions with one or more of the following: (a) a reader, the reader configured to read a payment and/or identity instrument, (b) a certified EMV level 3 (L3) payment application, wherein EMV stands for Europay, MasterCard, and Visa, (c) a sensor switch, the sensor switch configured to initiate and/or terminate a transaction, (d) a user interface function, and (e) an external data sensor switch function, the external data sensor switch function configured to validate, manage, and/or create transactions.

The above summary is not intended to represent every example embodiment within the scope of the current or future Claim sets. Additional example embodiments are discussed within the Figures and Detailed Description below.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 shows a first personal Point of Sale (pPOS) device that is configured to provide for card present e-commerce transactions and/or in vehicle merchant payments with a DMC (dynamic merchant configuration) payment kernel local to the device, in accordance with some example embodiments.
FIG. 2 shows a second personal Point of Sale (pPOS) device that is configured to provide for card present e-commerce transactions and/or in vehicle merchant payments with a DMC payment kernel split between being local and remote to the device, in accordance with some example embodiments.
FIG. 3A shows a third personal Point of Sale (pPOS) device that is configured to provide for card present e-commerce transactions and/or in vehicle merchant payments with a DMC payment kernel local to the device, in accordance with some example embodiments.
FIG. 3B shows a fourth personal Point of Sale (pPOS) device that is configured to provide for card present e-commerce transactions and/or in vehicle merchant payments with a DMC payment kernel remote to the device, in accordance with some example embodiments.
FIG. 3C shows a fifth personal Point of Sale (pPOS) device that is configured to provide for card present e-commerce transactions and/or in vehicle merchant payments with a DMC payment kernel split between being local and remote to the device, in accordance with some example embodiments.
FIG. 4 shows a sixth personal Point of Sale (pPOS) device that is configured to provide for card present e-commerce transactions and/or in vehicle merchant payments with a DMC payment kernel, wherein the device also includes an external data sensor switch function, in accordance with some example embodiments.
FIG. 5 shows a prior art payment transaction process flow, which uses a payment kernel configured to meet the merchant's requirements based on the rules the merchant sets in the payment kernel, wherein the rules and parameters are static (i.e., not dynamically configurable).
FIG. 6 shows a first payment transaction process flow, which uses a payment kernel configured for DMC (dynamic merchant configuration) (i.e., dynamically configurable), wherein the payment transaction is initiated by presenting a card to the pPOS device, in accordance with some example embodiments.
FIG. 7 shows a second payment transaction process flow, which uses a payment kernel configured for DMC (dynamic merchant configuration) (i.e., dynamically configurable), wherein the payment transaction can also be initiated by external data from an external data sensor switch (e.g., geolocation data which can authenticate that a customer is at a merchant location), in accordance with some example embodiments.
FIG. 8 shows a DMC (dynamic merchant configuration) framework for payment transaction processing, in accordance with some example embodiments.
FIG. 9 shows a flow chart of method steps for processing payment transaction, which uses a payment kernel configured for DMC (dynamic merchant configuration) (i.e., dynamically configurable), wherein the payment transaction is initiated by presenting a card to a pPOS device, in accordance with some example embodiments.
FIG. 10 shows a flow chart of method steps for processing payment transaction, which uses a payment kernel configured for DMC (dynamic merchant configuration) (i.e., dynamically configurable), wherein the payment transaction is initiated by external data from an external data sensor switch (e.g., geolocation data which can authenticate that a customer is at a merchant location), in accordance with some example embodiments.

### DETAILED DESCRIPTION

Representative devices and methods according to the present application are described in this section. These examples are being provided solely to add context and aid in the understanding of the described embodiments. It will thus be apparent to one skilled in the art that the described embodiments may be practiced without some or all of these specific details. In other instances, well known process steps or device details have not been described in detail in order to avoid unnecessarily obscuring the described embodiments. Other embodiments are possible, such that the following examples should not be taken as limiting.

In the following detailed description, references are made to the accompanying drawings, which form a part of the description and in which are shown, by way of illustration, specific embodiments in accordance with the described embodiments. Although these embodiments are described in sufficient detail to enable one skilled in the art to practice the described embodiments, it is understood that these examples are not limiting; such that other embodiments may be used, and changes may be made without departing from the spirit and scope of the described embodiments.

Today, merchant Point of Sale (POS) systems can be certified by the merchant acquirers for Level 3 with a certified EMV Level 1 contact and contactless reader. The EMV Level 2 payment kernel is configured to meet the merchant's requirements based on the rules the merchant sets in the payment kernel. These rules and parameters are static. In some embodiments, the present specification discloses a personal POS (pPOS) device and method, where different merchants can use the same customer pPOS hardware by changing the configuration of the payment kernel to their rules prior to processing the payment. Therefore, in some embodiments, the present specification discloses devices and methods that can process payment transactions using a payment kernel that is dynamically configurable.

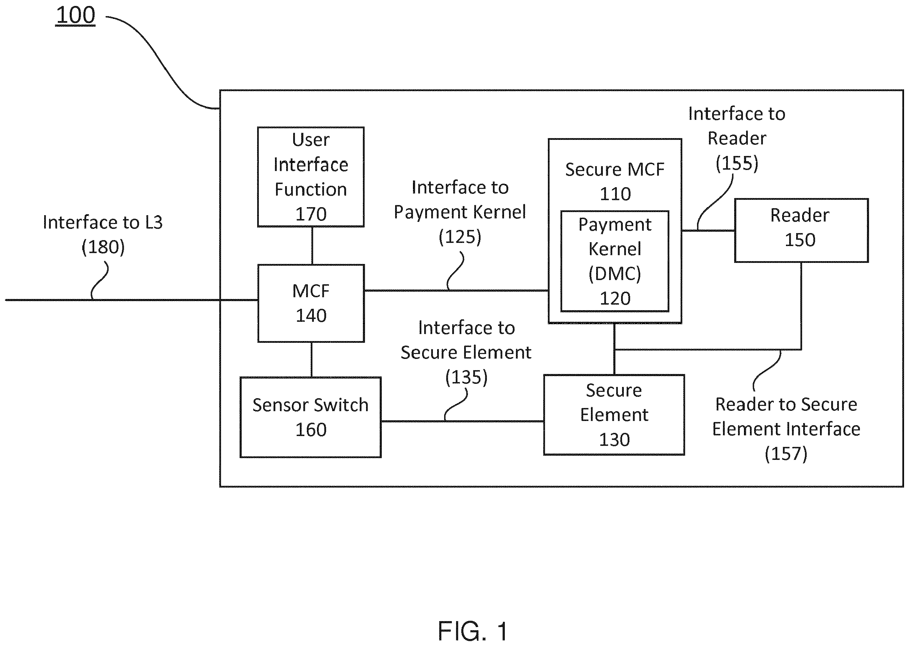

FIGS. 1-4 show some examples of personal Point of Sale (pPOS) devices that can be configured to utilize a dynamically configurable payment kernel, such as a DMC (dynamic merchant configuration) payment kernel.

FIG. 1 shows a first personal Point of Sale (pPOS) device that is configured to provide for card present e-commerce transactions and/or in vehicle merchant payments with a DMC (dynamic merchant configuration) payment kernel local to the pPOS device, in accordance with some example embodiments. FIG. 1 shows that the pPOS device 100 includes a secure microcontroller function (MCF) 110, a DMC payment kernel 120 (which is contained in the secure MCF 110), a secure element 130, a second MCF 140, a reader 150, a sensor switches 160, and a user interface function 170. FIG. 1 also shows that the pPOS device 100 includes an interface 180 to a certified EMV level 3 (L3) payment application (where EMV stands for Europay, MasterCard, and Visa), an interface 125 between the secure MCF 110 and the second MCF 140, an interface 135 between the sensor switch 160 and the secure element 130, an interface 155 between the secure MCF 110 and the reader 150, and an interface 157 between the reader 150 and the secure MCF 110 and the secure element 130.

In FIG. 1, the secure MCF 110 can be configured to provide application and data level encryption and hardware/software tamper detection. The DMC payment kernel 120 is contained in the secure MCF 110, and can be dynamically configured to process payment. In some embodiments, a user can allow the DMC payment kernel 120 to be dynamically configured by a merchant and/or merchant acquirer for a merchant payment or a user authentication transaction. In some embodiments, the DMC payment kernel 120 can be EMV level 2 certified for contact and/or contact less transaction, where EMV stands for Europay, MasterCard, and Visa.

In FIG. 1, the secure element 130 can be configured to store and process payment and identification application. In some embodiments, the secure element 130 can be configured to execute a secure element application that is used for payment and authentication. In some embodiments, the secure element application can perform authentication using a multi-factor authentication method. In some embodiments, the secure element application can perform authentication using a multi-factor authentication method via PKI (public key infrastructure) and FIDO (Fast IDentity Online). In some embodiments, the secure element 130 can be further configured to execute a second secure element application that is used for customer biometric storage and validation.

In FIG. 1, the pPOS device 100 also includes a second MCF 140. In some embodiments, the secure MCF 110 and/or a second MCF 140 can be configured to perform I/O (input/output) functions. In some embodiments, the secure MCF 100 and/or the second MCF 140 can be configured to perform I/O (input/output) functions with a certified EMV level 3 (L3) payment application, where EMV stands for Europay, MasterCard, and Visa. In FIG. 1, these I/O functions with the EMV level 3 payment application can be performed via the interface 180. In some embodiments, the secure MCF 110 and/or the second MCF 140 can be configured to perform I/O (input/output) functions with the certified EMV level 3 payment application using one or more of the following: USB (Universal Serial Bus), audio jack, Bluetooth, WiFi (wireless local area network), NFC (near field communication), near field magnetic induction (NFMI) communication, a remote MCF, and any computer network. Therefore, for example, the pPOS device 100 can perform I/O functions with the EMV level 3 payment application directly using any computer network (such as PAN (personal area network), LAN (local area network), WAN (wide area network), MAN (metropolitan area network), etc.) in a peer to peer configuration. Or, in another example, the pPOS device 100 can perform I/O functions with the EMV level 3 payment application indirectly using a remote MCF (in a peer to peer configuration or a tethering configuration). In such a case, the remote MCF can be a laptop computer, a desktop computer, a tablet computer, a smart phone, or any device that can access the internet. Further, the pPOS device 100 can be configured to interface with the remote MCF in a tethering configuration using the audio jack or one of these interface protocols: USB, Bluetooth, WiFi, NFC, NFMI.

In FIG. 1, the reader 150 can be configured to read a payment and/or identity instrument. In some embodiments, the reader 150 can be a certified EMV level 1 contact and/or contactless reader, where EMV stands for Europay, MasterCard, and Visa. In some embodiments, an antenna of the reader 150 can be enabled in a pPOS device enclosure or integrated into an external device. In some embodiments, the external device can be one of the following: wireless charging, WiFi (wireless local area network) communication, Bluetooth or Bluetooth low energy communication, near field magnetic induction (NFMI) communication, and cellular communication. In FIG. 1, the interface functions with the reader can be performed via the interface 155, which connects the reader 150 to the secure MCF 110. In some embodiments, the interface functions with the reader can be performed via other interfaces (not shown in FIG. 1), and with other elements of the pPOS device 100, such as the secure element 130.

In FIG. 1, the sensor switches 160 can be configured to initiate and/or terminate a transaction. In some embodiments, the sensor switches 160 can be further configured to collect user authentication data. In some embodiments, the sensor switches 160 can be further configured to collect user authentication data and notify a user of a device status.

In some embodiments, the sensor switches 160 includes a biometric sensor. In some embodiments, the biometric sensor is used to collect user biometric data for enrollment and authentication of the user of the device, and/or the transaction from the device to a merchant and/or a merchant acquirer. In some embodiments, the biometric data is managed by the user of the device. In some embodiments, the biometric data can be one or more of the following: a face of the user, a finger of the user, a fingerprint of the user, an iris of the user, a voice of the user, a heart rhythm of the user, a physical attribute of the user, and any other biometric identifier of the user.

In some embodiments, the sensor switches 160 includes a touch sensor. In some embodiments, the touch sensor is used to collect user created data for enrollment and authentication of the user of the device, and/or the transaction from the device to a merchant and/or a merchant acquirer. In some embodiments, a touch pattern and a sequence data can be managed by the user of the device using the touch sensor.

In FIG. 1, the user interface function 170 can provide a status of the device and a state of the transaction. In some embodiments, the user interface function 170 can use one or more of the following interfaces: a visual display, a light, a series of lights, an audio interface, a haptics interface. In some embodiments, the user interface function 170 can also use other interfaces to provide a status of the device and a state of the transaction.

FIG. 1 shows that a pPOS device 100 can include a secure microcontroller function (MCF) 110, a DMC payment kernel 120, a secure element 130, a second MCF 140, a reader 150, a sensor switches 160, a user interface function 170, and an interface 180 to a certified EMV level 3 (L3) payment application. It is not shown in FIG. 1, but in some embodiments a pPOS device can include only a secure microcontroller function (MCF) 110, a DMC payment kernel 120, a secure element 130, and an interface 180 to a certified EMV level 3 payment application. In some embodiments, a pPOS device can further include a reader. In some embodiments, a pPOS device can further include a second MCF. In some embodiments, a pPOS device can still further include a sensor switch and/or a user interface function. It is also understood that still other embodiments may be used, and changes may be made without departing from the spirit and scope of the described embodiments.

In some embodiments, a pPOS device can provide the following services or functions:
a. Enablement of Point to Point encryption (P2PE) or End to End (E2EE) encryption security
b. Reader to card CVM (customer validation methods) validation of issuer provided CVM data elements
c. Merchant selectable CVM and data elements based on transaction elements and rules
d. Merchant website integration

In some embodiments, a pPOS device can provide for device or transaction activation. For example, this can include tap and/or slide switches for customer creation and validate activation sequences.

In some embodiments, a pPOS device can provide the following features:
a. Storage of customer's CVMs in a secure element
b. CVM validation of customer CVM
c. Biometric sensors to collect customer biometric
d. Activation switches
e. Display of device status, merchant messages, issuer messages, and on card applet messages

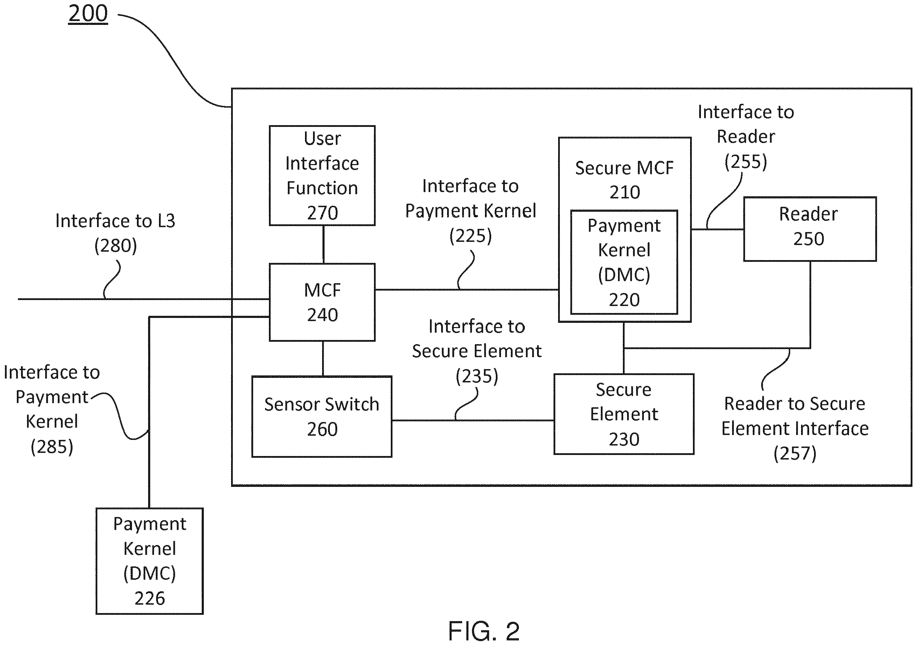

FIG. 2 shows a second personal Point of Sale (pPOS) device 200 that is configured to provide for card present e-commerce transactions and/or in vehicle merchant payments with a DMC payment kernel split between being local and remote to the pPOS device, in accordance with some example embodiments. The pPOS device 200 of FIG. 2 is very similar to the pPOS device 100 of FIG. 1, except for one important difference - pPOS device 200 of FIG. 2 also uses a DMC payment kernel 226, which is remote to the pPOS device. The pPOS device 100 of FIG. 1 does not use any payment kernel, which is remote to the pPOS device. Therefore, in summary, pPOS device 200 uses a DMC payment kernel that is split between being local and remote to the pPOS device. In some embodiments, the remote DMC payment kernel 226 can be a cloud-based and/or a server-based payment kernel.

The rest of pPOS device 200 is very similar to the pPOS device 100 of FIG. 1. In particular, FIG. 2 shows that the pPOS device 200 includes a secure microcontroller function (MCF) 210, a DMC payment kernel 220 (which is contained in the secure MCF 210), a secure element 230, a second MCF 240, a reader 250, a sensor switch 260, and a user interface function 270. FIG. 2 also shows that the pPOS device 200 includes an interface 280 to a certified EMV level 3 (L3) payment application (where EMV stands for Europay, MasterCard, and Visa), an interface 225 between the secure MCF 210 and the second MCF 240, an interface 235 between the sensor switch 260 and the secure element 230, an interface 255 between the secure MCF 210 and the reader 250, and an interface 257 between the reader 250 and the secure MCF 210 and the secure element 230.

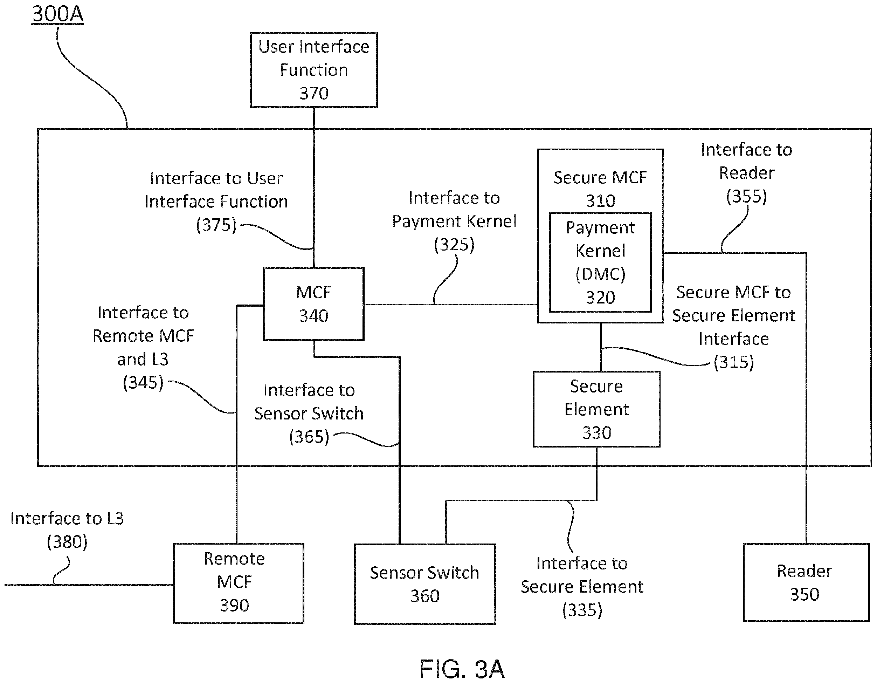

FIG. 3A shows a third personal Point of Sale (pPOS) device 300A that is configured to provide for card present e-commerce transactions and/or in vehicle merchant payments with a DMC payment kernel local to the device, in accordance with some example embodiments. The pPOS device 300A shows that a pPOS can include, at a minimum, only a secure microcontroller function (MCF) 310, a DMC payment kernel 320, a secure element 330, and an interface 380 to a certified EMV level 3 payment application. The pPOS device 300A also includes a second MCF 340, but that is not absolutely needed, since the various interfaces to the second MCF 340 can be directly interfaced to the secure MCF 310. FIG. 3A shows that a reader 350, a sensor switch 360, and a user interface function 370 can all be remote to pPOS device 300A. But, in some embodiments, a pPOS device can further include a reader 150. In some embodiments, a pPOS device can further include a second MCF 140. In some embodiments, a pPOS device can still further include a sensor switch 160 and/or a user interface function 170. In general, a pPOS device can further include one or more of the following: a reader, a sensor switch, a user interface function, and a second MCF. It is also understood that still other embodiments may be used, and changes may be made without departing from the spirit and scope of the described embodiments.

FIG. 3A shows that pPOS device 300A can be interfaced with an EMV level 3 payment application via a remote MCF 390. In some embodiments, the pPOS device 300A can be configured to interface with the remote MCF 390 using one or more of the following: USB (Universal Serial Bus), audio jack, Bluetooth, WiFi (wireless local area network), NFC (near field communication), near field magnetic induction (NFMI) communication, and any computer network.

FIG. 3A shows that the reader 350 can be external to the pPOS device. In some embodiments, the pPOS device 300A can be configured to perform I/O (input/output) functions with the reader 350 using one or more of the following: USB (Universal Serial Bus), audio jack, Bluetooth, WiFi (wireless local area network), NFC (near field communication), near field magnetic induction (NFMI) communication, a remote MCF, and any computer network.

FIG. 3A shows that the user interface function 370 can be external to the pPOS device. In some embodiments, the pPOS device 300A can be configured to perform I/O (input/output) functions with the user interface function 370 using one or more of the following: USB (Universal Serial Bus), audio jack, Bluetooth, WiFi (wireless local area network), NFC (near field communication), near field magnetic induction (NFMI) communication, a remote MCF, and any computer network.

FIG. 3A shows that the sensor switch 360 can be external to the pPOS device. In some embodiments, the pPOS device 300A can be configured to perform I/O (input/output) functions with the sensor switch 360 using one or more of the following: USB (Universal Serial Bus), audio jack, Bluetooth, WiFi (wireless local area network), NFC (near field communication), near field magnetic induction (NFMI) communication, a remote MCF, and any computer network.

As an example, to FIG. 3A, the pPOS device 300A can be connected to a computer through a USB connection. Then, in some embodiments, the sensor switch 360 can be a fingerprint reader of the computer. Further, in some embodiments, the user interface function 370 can be a display screen of the computer.

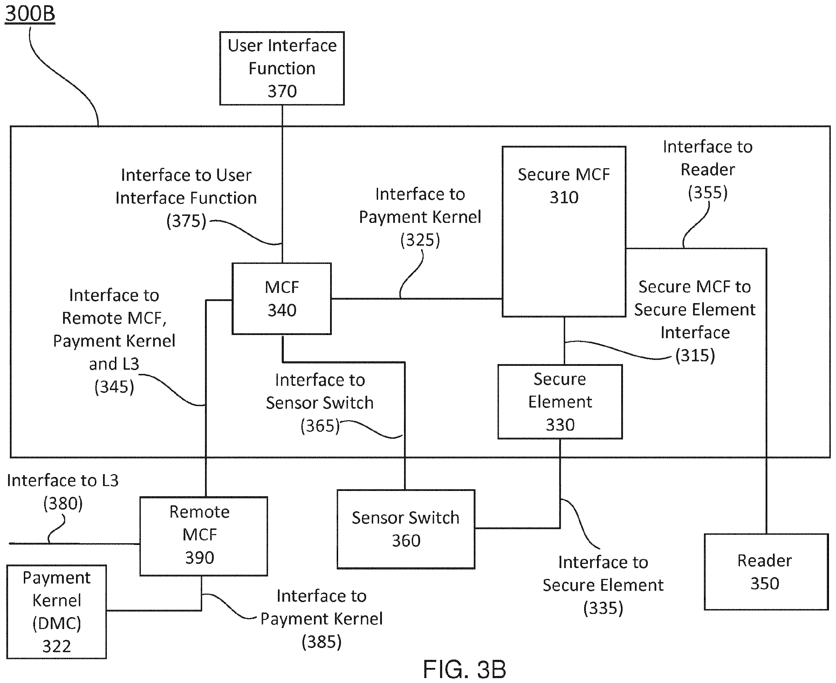

FIG. 3B shows a fourth personal Point of Sale (pPOS) device 300B that is configured to provide for card present e-commerce transactions and/or in vehicle merchant payments with a DMC payment kernel remote to the device, in accordance with some example embodiments. The pPOS device 300B is very similar to the pPOS device 300A shown in FIG. 3A, except that the DMC payment kernel 322 is remote to the device in the pPOS device 300B, while the DMC payment kernel 320 is local to the device in the pPOS device 300A. Because payment kernel 322 is remote to pPOS device 300B, there is also interface 345 (and remote MCF 390 and interface 385) connecting MCF 340 to remote payment kernel 322. Otherwise, all other components and interfaces function in a similar manner for both pPOS device 300A and pPOS device 300B.

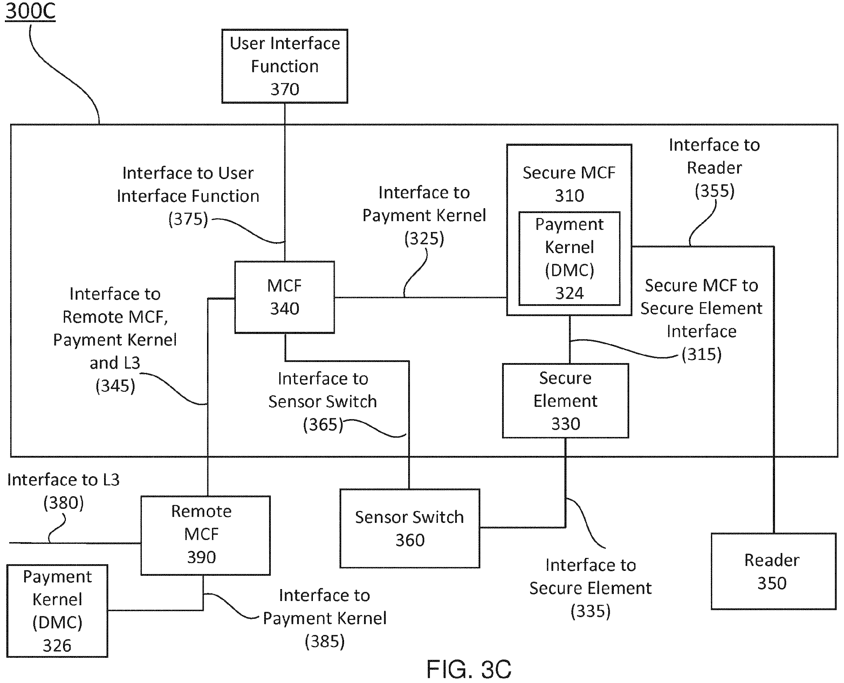

FIG. 3C shows a fifth personal Point of Sale (pPOS) 300C device that is configured to provide for card present e-commerce transactions and/or in vehicle merchant payments with a DMC payment kernel split between being local and remote to the device, in accordance with some example embodiments. In pPOS device 300C, there is a payment kernel 324 that is local to the device 300C and a payment kernel 326 that is remote to the device 300C. The pPOS device 300C is very similar to the pPOS device 300A (shown in FIG. 3A) and the pPOS device 300B (shown in FIG. 3B), except that the payment kernel is now split between being local and remote to the pPOS device 300C, while the payment kernel is local to the device in the pPOS device 300A and remote to the device in the pPOS device 300B. Otherwise, all other components and interfaces function in a similar manner for all three devices: pPOS device 300A, pPOS device 300B, and pPOS device 300C.

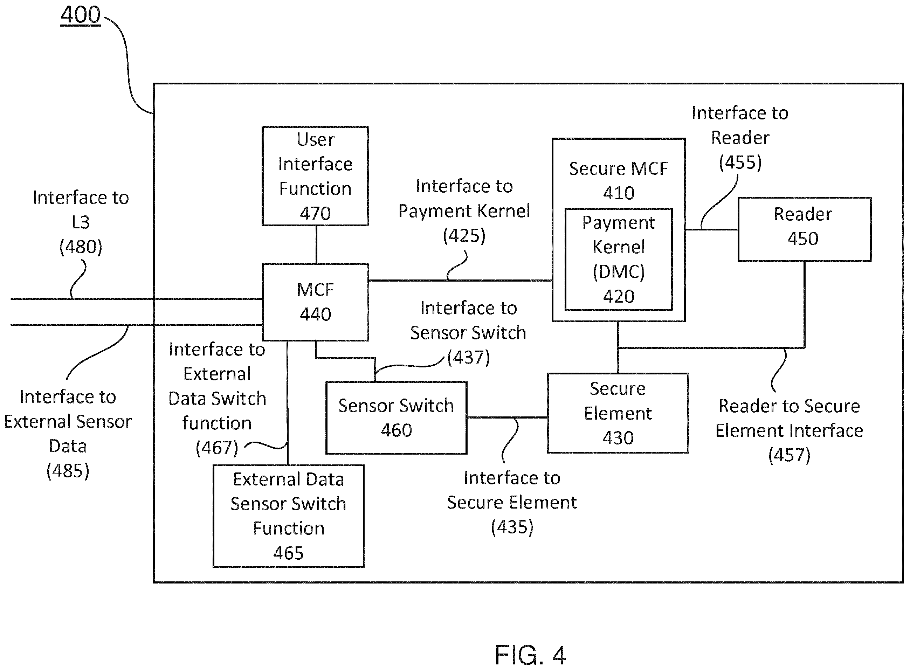

FIG. 4 shows a sixth personal Point of Sale (pPOS) device 400 that is configured to provide for card present e-commerce transactions and/or in vehicle merchant payments with a DMC payment kernel, wherein the device also includes an external data sensor switch function, in accordance with some example embodiments. The pPOS device 400 of FIG. 4 is very similar to the pPOS device 100 of FIG. 1, except for one important difference - pPOS device 400 of FIG. 4 also has an external data sensor switch function 465, which can receive external data. In contrast, the pPOS device 100 of FIG. 1 does not include an external data sensor switch function. Therefore, in summary, pPOS device 400 of FIG. 4 includes an external data sensor switch function 465.

In some embodiments, the external data sensor switch function is configured to process external data for the device. In some embodiments, the external data sensor switch function is configured to validate, manage, and/or create transactions. In some embodiments, the external data sensor switch function allows external data to access configuration and processing of the payment kernel by a merchant, a merchant acquirer, a payment issuer, and/or an identification issuer. In some embodiments, the external data sensor switch function allows external data to access configuration and processing of the payment kernel by a merchant, a merchant acquirer, a payment issuer, and/or an identification issuer, wherein the external data is processed by the external data sensor switch function. In some embodiments, the external data sensor switch function provides one or more of the following functions: (1) sensor data validation and filters, (2) data identification by type and/or sensor and/or interface and/or communication protocol, (3) data correlation between data types and sensors, (4) data fusion between data, communication protocol, and data types.

In some embodiments, the pPOS device 400 can use external data elements and sources to authenticate the merchant to the pPOS device 400 in a customer's vehicle. The external data includes the physical address of the merchant, geolocation data, cell tower phone data, local merchant Bluetooth and Wi-Fi data from beacons or hotspots.

In some embodiments, the external data can include sensor data, such as cellular signal, WiFi (wireless local area network) signal, UHF (ultra-high frequency) signal, beacon signal, V2X (vehicle-to-infrastructure and/or vehicle-to-vehicle) radar signal, image data. In some embodiments, the external data can include sensor data which is comprised of one of the following: geolocation data, Bluetooth or Bluetooth low energy directional and signal power, WiFi (wireless local area network) signal, GSM (Global System for Mobile Communications) signal, NFMI (near field magnetic induction) signal, image data, radar data, V2X (vehicle-to-infrastructure and/or vehicle-to-vehicle) radar signal.

In some embodiments, the external data types are RF (radio frequency) signals comprised of one or more of the following: WiFi (wireless local area network) signal, Bluetooth or Bluetooth low energy signal, GSM (Global System for Mobile Communications) signal, NFMI (near field magnetic induction) signal, V2X (vehicle-to-infrastructure and/or vehicle-to-vehicle) radar signal, UHF (ultra-high frequency) signal, HF (high frequency) signal, LF (low frequency) signal. In some embodiments, the external data types are image data comprised of one or more of the following: images and/or videos from side, front, or rear cameras on the vehicle, images and/or videos from side, front, or rear cameras from a second vehicle.

With regards to sensor data validation and filters, in some embodiments, sensor data filter is the process or ability of removing data errors like measurement errors, inconsistent data, and/or duplicate data form a sensor. An example would be getting WiFi data from a merchant and some of data is missing data elements. Filter would remove/delete that data.

With regards to data correlation between data types and sensors, in some embodiments, sensor data correlation is the ability to understand the data gathered as it applies to other data in the appropriate context. Data correlation is the ability to pull data from various sources and derive benefit from the understanding of the relationship between them to determine a more informed way forward. An example would be combining WiFi merchant data with geolocation user cell data as a way to determine that a user is at the merchant location.

With regards to data fusion between data, communication protocol, and data types, in some embodiments, sensor data fusion is the process of integrating multiple data sources to produce more consistent, accurate, and useful information than that provided by any individual data source. An example for this would be creating a new event/transaction from WiFi merchant data with geolocation user cell data and a pPOS device for a user to make a payment.

In some embodiments, the data correlation and fusion are comprised of one or more of the following functions: sensor data collection and validation of data events, correlation of sensor data events with image processing data, and/or geolocation data, and/or transactional history, fusion of sensor data events with image processing data, and/or geolocation data, and/or transactional history.

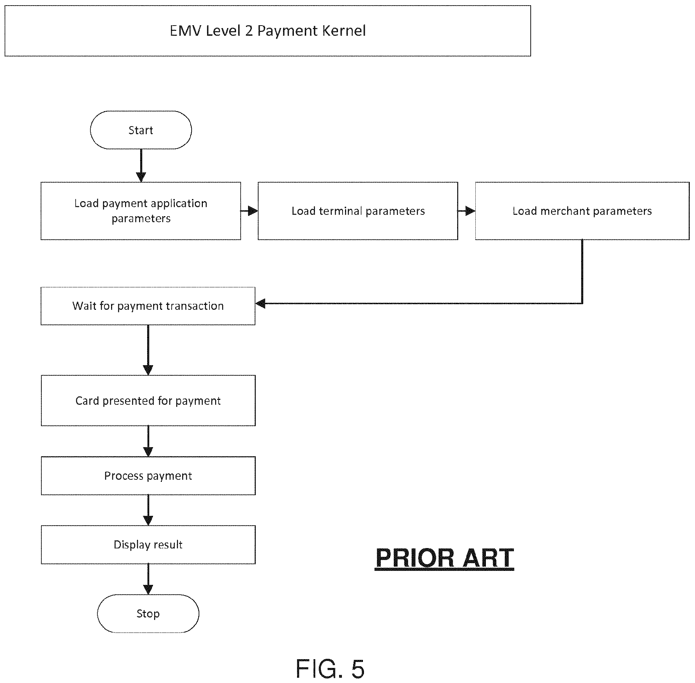

FIG. 5 shows a prior art payment transaction process flow, which uses a payment kernel configured to meet the merchant's requirements based on the rules the merchant sets in the payment kernel, wherein the rules and parameters are static (i.e., not dynamically configurable). Therefore, FIG. 5 shows a payment kernel that is not dynamically configurable, and where the rules and parameters are static. In this prior art flow, the merchant Point of Sale (POS) systems can be certified by the merchant acquirers for Level 3 with a certified EMV level 1 contact and contactless reader. The EMV Level 2 payment kernel is configured to meet the merchant's requirements based on the rules the merchant sets in the payment kernel. These rules and parameters are static. This can be seen in FIG. 5, where the flow begins by loading the payment application parameters, loading the terminal properties, and loading the merchant parameters. Note that these rules and parameters are static. Next, the flow continues to wait for payment transaction, present card for payment, process payment, and then display result. This is completely in contrast to the case for a personal POS (pPOS) device, where different merchants can use the same customer pPOS hardware by changing the configuration of the payment kernel to their rules prior to processing the payment.

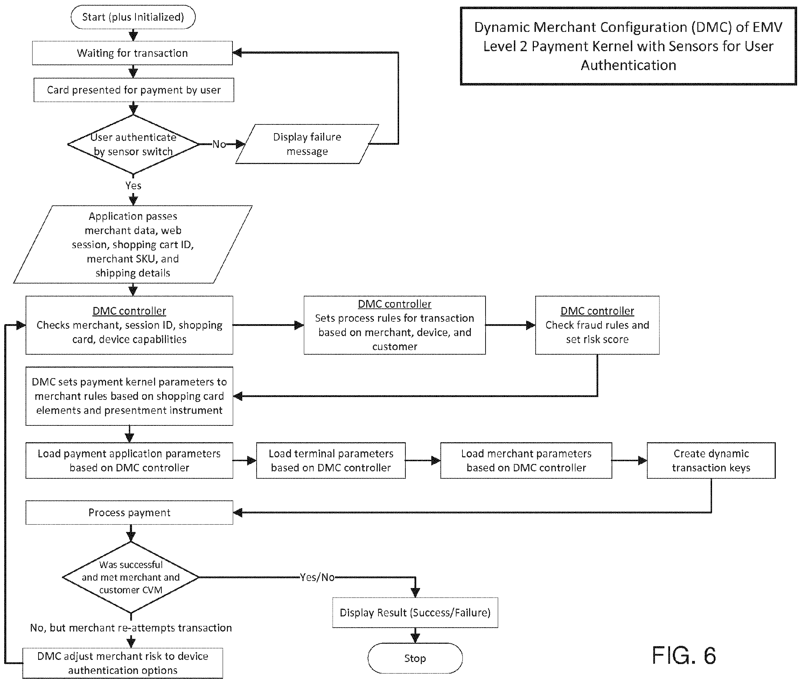

FIG. 6 shows a first payment transaction process flow, which uses a payment kernel configured for DMC (dynamic merchant configuration) (i.e., dynamically configurable), wherein the payment transaction is initiated by presenting a card to the pPOS device, in accordance with some example embodiments. Here, FIG. 6 shows a payment kernel that is dynamically configurable, where the payment kernel is configured for DMC (dynamic merchant configuration).

In the FIG. 6 payment transaction process flow, the flow begins by initializing a device (such as a pPOS device) and then waiting for a payment transaction. Next, the transaction is initiated by presenting a card for payment by a user (who is also a customer). In some embodiments, this card can be a payment and/or identification instrument. Then the user is authenticated by a sensor switch, which can include a biometric sensor in some embodiments. In turn, the biometric sensor is used to collect user biometric data for enrollment and authentication of the user of the device. In some embodiments, the biometric data can be one or more of the following: a face of the user, a finger of the user, a fingerprint of the user, an iris of the user, a voice of the user, a heart rhythm of the user, a physical attribute of the user, and any other biometric identifier of the user. Because the biometric data can be stored on the pPOS (and not stored on some remote server), the biometric data is managed by the user of the device and is hence more private and more secure.

In FIG. 6, if the user is not authenticated by the pPOS device, then a failure message is displayed, and the flow returns to the "Waiting for transaction" state. Otherwise, if the user is authenticated by the pPOS device, then the flow continues to the step, where the application passes merchant data, web session, shopping cart ID, merchant SKU, and shipping details. Next, the DMC (dynamic merchant configuration) controller checks merchant, session ID, shopping card, and device capabilities. The DMC controller sets process rules for payment transaction based on merchant, device, and customer. Here, there is dynamic configuring of process rules based on merchant, device, and customer. The DMC controller also checks fraud rules and sets risk score.

Then the DMC controller sets payment kernel parameters to merchant rules based on shopping card elements and presentment instrument. Next, the flow loads payment application parameters, terminal parameters, and merchant parameters based on DMC controller. The flow creates the dynamic transaction keys. Then the flow processes the payment. Next, the flow checks whether the payment transaction was successful and met merchant and customer CVM. If yes, then the payment transaction is successful and the flow displays the result as "Success". If no, then the payment transaction is unsuccessful, and the flow displays the result as "Failure". However, under some circumstances, the merchant may want to re-attempt the payment transaction, even if the payment transaction was unsuccessful. In FIG. 6, this option is shown as "No, but merchant re-attempts transaction". (As an example, for this "No, but merchant re-attempts transaction" option, the payment transaction may have failed for insufficient authentication, then the merchant may want to re-process the payment transaction, requesting that the user provides for additional authentication or different authentication.) After this "No, but merchant re-attempts transaction" option, the DMC controller can adjust the merchant risk to device authentication options via the fraud rules (but, in some embodiments, the DMC controller can also leave the merchant risk unchanged). Then the flow returns to the step where the DMC controller checks merchant, session ID, shopping card, and device capabilities. After that step, the flow continues as before, and the "Process payment" is attempted one more time, and the flow checks again whether the payment transaction was successful and met merchant and customer CVM.

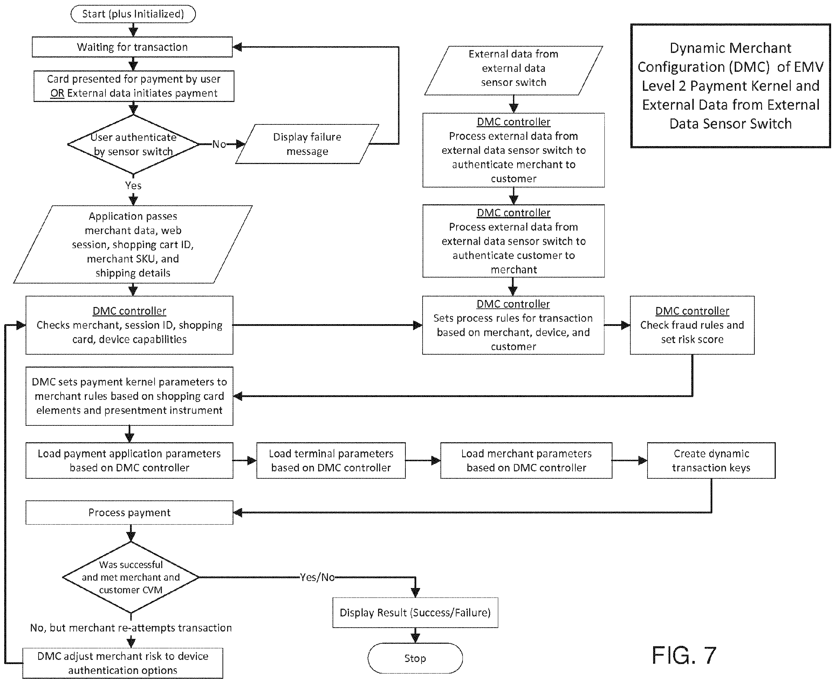

FIG. 7 shows a second payment transaction process flow, which uses a payment kernel configured for DMC (dynamic merchant configuration) (i.e., dynamically configurable), wherein the payment transaction can also be initiated by external data from an external data sensor switch (e.g., geolocation data which can authenticate that a customer is at a merchant location), in accordance with some example embodiments. FIG. 7 also shows a payment kernel that is dynamically configurable, where the payment kernel is configured for DMC (dynamic merchant configuration).

The payment transaction process flow of FIG. 7 is similar to the payment transaction process flow of FIG. 6, except now there is also an additional alternative means to initiate the payment transaction. FIG. 7 shows that the payment transaction can also be initiated by external data from an external data sensor switch, as well as initiated by presenting a card to the pPOS device. Therefore, in order that the payment transaction can also be initiated by external data from an external data sensor switch, a pPOS device used must have an external data sensor switch function, such pPOS device 400 shown in FIG. 4.

In FIG. 7, the alternative method to initiate the payment transaction can begin with external data from an external data sensor switch. In some embodiments, this external data can be geolocation data which authenticates that a customer is at a particular merchant location. In some business scenario embodiments, this can be a driver (i.e., a user or a customer) who has already filled his electronic shopping cart with potential purchases from a fast food drive-thru before the driver arrives at the drive-thru. Then, when the driver arrives at the drive-thru check out window, the external data sensor switch can use geolocation data (i.e., external data) to authenticate that the driver is at the merchant location and initiate the payment transaction with pPOS device. In other embodiments, this external data can also be an image of a merchant building, a branding of a merchant, or a logo of a merchant. In turn, this external data (i.e., image of merchant building, branding, or logo) can also be used to authenticate that a customer is at a particular merchant location. In some embodiments, a branding can be a name, term, design, symbol, or other feature that distinguishes an organization or product from its rivals in the eyes of a customer, while a logo is a graphic mark, emblem, or symbol commonly used by a merchant to aid and promote instant public recognition.

After the external data has initiated the payment transaction, then the user is authenticated by a sensor switch, which can include a biometric sensor in some embodiments. In FIG. 7, if the user is not authenticated by the pPOS device, then a failure message is displayed, and the flow returns to the "Waiting for transaction" state. Otherwise, if the user is authenticated by the pPOS device, then the flow continues to the step, where the application passes merchant data, web session, shopping cart ID, merchant SKU, and shipping details. Next, the FIG. 7 flow proceeds in a similar manner as the FIG. 6 flow, and the DMC (dynamic merchant configuration) controller checks merchant, session ID, shopping card, and device capabilities.

In FIG. 7, the external data sensor switch can be constantly supplying external data to the flow. In some embodiments, the external data sensor switch can be continuously or periodically (or at certain trigger events) supplying external data to the flow. In some embodiments, this external data can be geolocation data which can authenticate that a customer is at a particular merchant location. This is shown by the three steps (i.e., three boxes) above the step "DMC controller - Sets process rules for transaction based on merchant, device, and customer". For the first of these three steps, external data from external data sensor switch is supplied to the flow. Next, the DMC controller can process external data from external data sensor switch to authenticate merchant to customer. (For example, the flow can use geolocation data (i.e., external data) to authenticate to the customer that the customer is indeed at a particular merchant store.) Additionally, the DMC controller can also process external data from external data sensor switch to authenticate customer to merchant. (For example, the flow can also use geolocation data (i.e., external data) to authenticate to the merchant that the customer is indeed at a particular merchant store.) Then the flow continues to the step, where the DMC controller can set process rules for transaction based on merchant, device, and customer. Following that, the rest of the payment transaction process flow is similar to that shown in FIG. 6.

As for the rest of the payment transaction process flow, the FIG. 7 flow can process and behave in the same manner as the FIG. 6 flow.

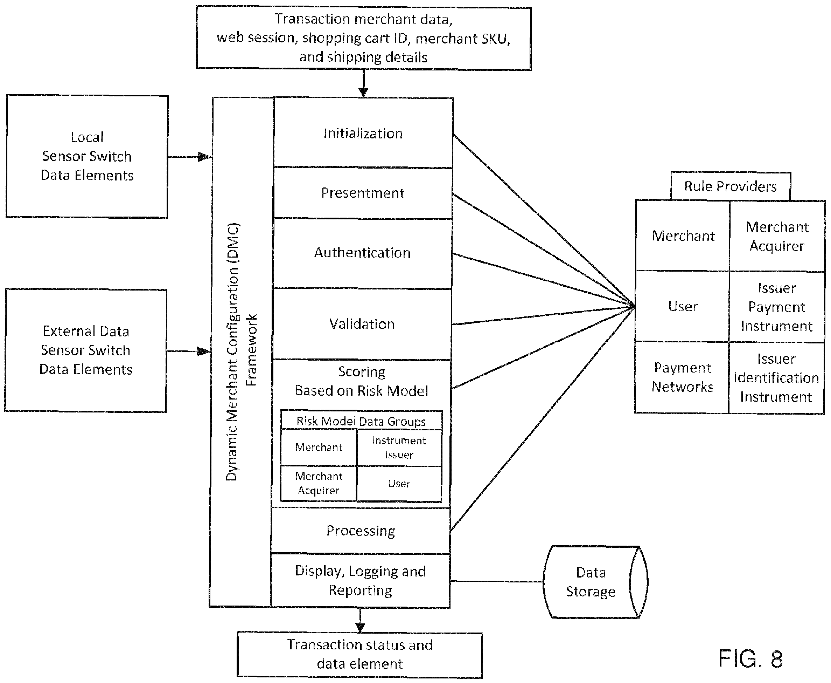

FIG. 8 shows a DMC (dynamic merchant configuration) framework for payment transaction processing, in accordance with some example embodiments. FIG. 8 shows that a payment transaction processing can include the following steps: initialization, presentment, authentication, validation, scoring based on risk model, processing, display, logging and reporting. FIG. 8 shows that the risk model can be based on data from one or more of the following data groups: merchant, merchant acquirer, instrument issuer, and user. In some embodiments, this means that the risk of fraud can be based on rules set by a merchant, a merchant acquirer, an instrument issuer, and/or a user. In some embodiments, this means that the risk of fraud can be determined using rules based on a merchant, a merchant acquirer, an instrument issuer, and/or a user associated with a payment transaction. FIG. 8 further shows that, in some embodiments, the step of display, logging and reporting can include: (1) storing logging data at a data storage, and (2) displaying the transaction status and data element. In some embodiments, the logging data can be stored at a data storage that is local and/or remote to a pPOS device. In some embodiments, the transaction status and data element can be displayed and reported on a display that is local and/or remote to a pPOS device.

FIG. 8 shows that, in some embodiments, transaction merchant data, web session, shopping cart ID, merchant SKU, and shipping details are passed to the dynamic merchant configuration (DMC).

FIG. 8 shows that, in some embodiments, dynamic merchant configuration (DMC) process can be triggered either by local sensor switch data elements or by external data sensor switch data elements.

In FIG. 8, when the dynamic merchant configuration (DMC) process is triggered by the local sensor switch data elements, this can correspond to the scenario where the payment transaction is initiated by presenting a card to the pPOS device. In this scenario, the card can be a payment and/or identification instrument. Therefore, for some embodiments, the payment transaction can be initiated by presenting a payment and/or identification instrument to the pPOS device. Then the user can be authenticated by a sensor switch local to the pPOS device. In some embodiments, the local sensor switch can include a biometric sensor. In turn, the biometric sensor is used to collect user biometric data for enrollment and authentication of the user of the device. In some embodiments, the biometric data can be one or more of the following: a face of the user, a finger of the user, a fingerprint of the user, an iris of the user, a voice of the user, a heart rhythm of the user, a physical attribute of the user, and any other biometric identifier of the user. In some embodiments, after the user is authenticated by the local sensor switch, the local sensor switch can send local sensor switch data elements to trigger the dynamic merchant configuration (DMC) process.

In FIG. 8, when the dynamic merchant configuration (DMC) process is triggered by external data sensor switch data elements, this can correspond to the scenario where the payment transaction is initiated by external data from an external data sensor switch. In some embodiments, this external data can be geolocation data which can authenticate that a customer is at a particular merchant location. Then the external data sensor switch can send external data sensor switch data elements to trigger the dynamic merchant configuration (DMC) process. In turn, in some embodiments, the DMC controller can process external data sensor switch data elements to authenticate merchant to customer. Additionally, in some embodiments, the DMC controller can also process external data sensor switch data elements to authenticate customer to merchant.

FIG. 8 also shows that the rules can be provided by one or more of the following: a merchant, a user, a merchant acquirer, an issuer of a payment instrument, an issuer of an identification instrument, and a payment network. Similarly, the rules can be based on one or more of the following: a merchant, a user, a merchant acquirer, an issuer of a payment instrument, an issuer of an identification instrument, and a payment network. FIG. 8 further shows that the rules can be applied to all possible steps of a payment transaction processing: initialization, presentment, authentication, validation, scoring based on risk model, processing, display, logging and reporting.

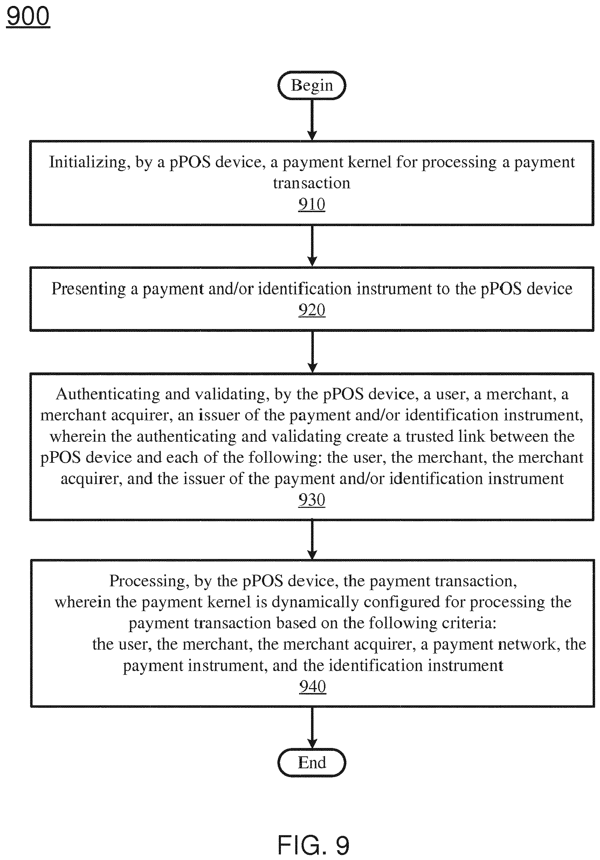

FIG. 9 shows a flow chart of method steps for processing payment transaction, which uses a payment kernel configured for DMC (dynamic merchant configuration) (i.e., dynamically configurable), wherein the payment transaction is initiated by presenting a card to a pPOS device, in accordance with some example embodiments. As shown in FIG. 9, the method 900 begins at step 910, where the method initializes, by a pPOS device, a payment kernel for processing a payment transaction. Then, the method proceeds to step 920. In step 920, the method presents a payment and/or identification instrument to the pPOS device. Next, at step 930, the method authenticates and validates, by the pPOS device, a user, a merchant, a merchant acquirer, an issuer of the payment and/or identification instrument, wherein the authenticating and validating create a trusted link between the pPOS device and each of the following: the user, the merchant, the merchant acquirer, and the issuer of the payment and/or identification instrument. Then, at step 940, the method processes, by the pPOS device, the payment transaction, wherein the payment kernel is dynamically configured for processing the payment transaction based on the following criteria: the user, the merchant, the merchant acquirer, a payment network, the payment instrument, and the identification instrument.

In some embodiments, the initializing step 910 is comprising of: defining rules and data elements for the payment transaction based on: whether this is a first time or recurring payment transaction from the same merchant, location of the merchant, external data, and the payment and/or identification instrument. In some embodiments, the data elements for the payment transaction are comprising of one or more of the following: payment transaction date and time, payment transaction status, wherein the payment transaction status is comprising of success or failure with reason code, payment transaction merchant ID (identification), and payment transaction fraud score.

In some embodiments, the presenting step 920 is comprising of: presenting, by the user, the payment and/or identification instrument to the pPOS device.

In some embodiments, the authenticating and validating step 930 is comprising of: comparing data elements locally stored on the pPOS device with both payment transaction data elements and/or external sensor data elements. In some embodiments, the data elements are locally stored on the pPOS device, wherein the data elements are comprising of: user identification data elements, merchant identification data elements, and merchant acquirer identification data elements stored in a secure microcontroller function (MCF) and/or a secure element. In some embodiments, the user identification data elements are comprising of one or more of the following: a face of the user, a finger of the user, a fingerprint of the user, an iris of the user, a voice of the user, a heart rhythm of the user, a physical attribute of the user, and any other biometric identifier of the user. In some embodiments, the merchant identification data elements are comprising of one or more of the following: a merchant ID (identification), a merchant key pair, a merchant address, a merchant geolocation data, a merchant store image, a merchant logo and/or branding and/or trademark image, a merchant location RF (radio-frequency) and/or UHF (ultra-high frequency) identification, a merchant electronic shopping cart identification (for example, data used to link the customer electronic shopping cart to merchant website or mobile application), and a merchant to user electronic shopping cart session identification (for example, data used to manage the customer when shopping (usually a 256-byte key)). In some embodiments, the merchant acquirer identification data elements are comprising of one or more of the following: a merchant acquirer ID (identification), a merchant acquirer key pair, a merchant acquirer Terminal ID (identification), and a merchant acquirer connection protocol and identifier (for example, data elements/setting for connection to the merchant acquirer (such as http with username password, or http and key pair)). In some embodiments, the merchant key pair and the merchant acquirer key pair can be a public key infrastructure (PKI) key pair, a point-to-point encryption (P2PE) key pair, or an end-to-end encryption (E2EE) key pair.

In some embodiments, the processing step 940 is comprising of: payment transaction scoring of the user and the merchant, wherein data elements from the payment transaction, prior payment transaction history, and the payment and/or identification instrument are numerically analyzed by rules to determine a risk of fraud by the user or the merchant. In some embodiments, the processing step 940 is further comprising of: EMV chip on chip payment processing, wherein EMV stands for Europay, MasterCard, and Visa. In some embodiments, the payment transaction scoring is based on one or more of the following: shopping usage pattern of the user, authentication method used by the merchant (for example, different risk for different authentication method), merchant type of the merchant (for example, quick service restaurants or tolling can have different risks), usage pattern of the payment and/or identification instrument to the merchant (for example, using velocity check to catch potential fraudulent transactions), success or failure of payment transactions by the issuer of the payment and/or identification instrument, merchandise type of items in electronic shopping cart (for example, velocity check of high volume purchase of seldom used items such as buying many pencils in a short time), and shopping cart checkout value and merchant type of the merchant (for example, velocity check of buying too many high price items, but this can be a different value for different merchant types, such as a higher value for a computer store versus a supermarket).

It is not shown in FIG. 9, but in some embodiments, the method 900 can be further comprising these steps: (1) displaying status of the payment transaction, and (2) logging of the payment transaction. In some embodiments, the displaying status of the payment transaction is comprising of one or more of the following: (1) displaying status on a pPOS display, (2) displaying status on an external audio device via an external user interface (for example, displaying status on a personal computer or a mobile phone), and (3) displaying status on an external display device via an external user interface (for example, this can include messaging via email, text, etc.). In some embodiments, the logging of the payment transaction is comprising of one of the following: (1) logging the payment transaction locally on the pPOS device, (2) logging the payment transaction remotely from the pPOS device, (3) logging the payment transaction both locally on and remotely from the pPOS device. In some embodiments, the logging can include the following: payment transaction date and time, payment transaction status (for example, success or failure with reason code), payment transaction merchant ID (identification), payment transaction fraud score, device type (for example, different device types associated with different pPOS implementations, such as the different pPOS implementations shown in FIGS. 1-4), payment and/or identification instrument type, electronic shopping card ID (identification), and electronic shopping card sessions key.

It is not shown in FIG. 9, but in some embodiments, the method 900 can have step 910 (initializing) removed. In those embodiments, the method 900 can begin with step 920 (presenting), and then continue to step 930 (authenticating and validating). This is then followed with step 940 (processing).

It is not shown in FIG. 9, but in other embodiments, the method 900 can have the sequence of steps 910 (initializing) and 920 (presenting) reversed. In those embodiments, the method 900 can begin with step 920 (presenting), and then continue to step 910 (initializing). This is then followed with step 930 (authenticating and validating).

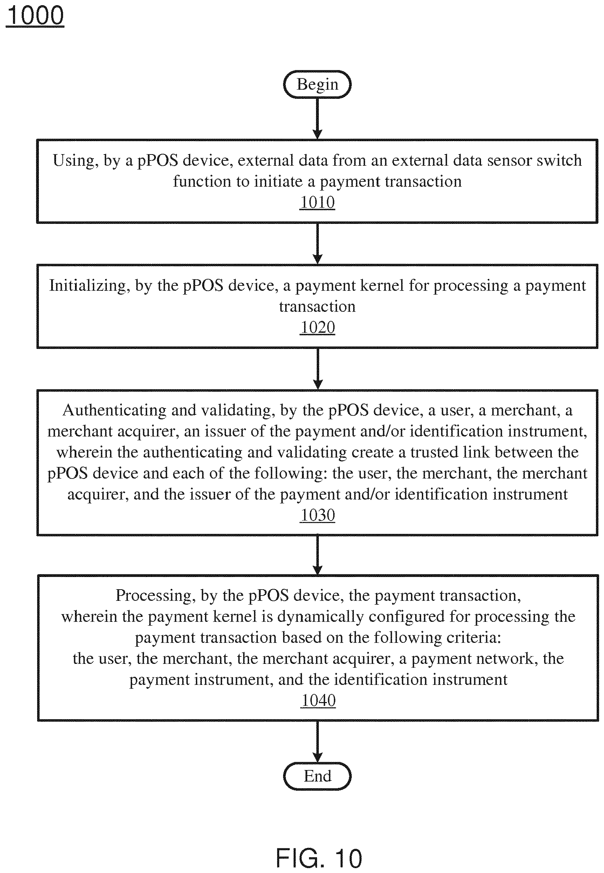

FIG. 10 shows a flow chart of method steps for processing payment transaction, which uses a payment kernel configured for DMC (dynamic merchant configuration) (i.e., dynamically configurable), wherein the payment transaction is initiated by external data from an external data sensor switch (e.g., geolocation data which can authenticate that a customer is at a merchant location), in accordance with some example embodiments. As shown in FIG. 10, the method 1000 begins at step 1010, where the method uses, by a pPOS device, external data from an external data sensor switch function to initiate a payment transaction. Then, the method proceeds to step 1020. In step 1020, the method initializes, by the pPOS device, a payment kernel for processing a payment transaction. (Note: It might be beneficial to initialize the payment kernel (i.e., step 1020) right after step 1010, because step 1010 can be supplying the merchant information needed to configure the payment kernel.) Next, at step 1030, the method authenticates and validates, by the pPOS device, a user, a merchant, a merchant acquirer, an issuer of the payment and/or identification instrument, wherein the authenticating and validating create a trusted link between the pPOS device and each of the following: the user, the merchant, the merchant acquirer, and the issuer of the payment and/or identification instrument. Then, at step 1040, the method processes, by the pPOS device, the payment transaction, wherein the payment kernel is dynamically configured for processing the payment transaction based on the following criteria: the user, the merchant, the merchant acquirer, a payment network, the payment instrument, and the identification instrument.

In some embodiments, the authenticating and validating step 1030 is comprising of: comparing data elements locally stored on the pPOS device with both payment transaction data elements and/or external sensor data elements. In some embodiments, the external data used by the pPOS device in step 1010 is comprised of one or more of the following: WiFi (wireless local area network) communication, Bluetooth or Bluetooth low energy communication, NFMI (near field magnetic induction) communication, cellular communication, and V2X (vehicle-to-infrastructure and/or vehicle-to-vehicle) communication. In some embodiments, the merchant creates a payment transaction event trigger based on processing a location data of the merchant, wherein the location data of the merchant is provided by the external data, wherein the payment transaction event trigger prompts the pPOS device for payment.

In some embodiments, the processing step 1040 is comprising of: payment transaction scoring of the user and the merchant, wherein data elements from the payment transaction, prior payment transaction history, and the payment and/or identification instrument are numerically analyzed by rules to determine a risk of fraud by the user or the merchant.

It is not shown in FIG. 10, but in some embodiments, the method 1000 can have step 1020 (initializing) removed. In those embodiments, the method 1000 can begin with step 1010 (using external data to initiate payment transaction), and then continue to step 1030 (authenticating and validating). This is then followed with step 1040 (processing).

It is not shown in FIG. 10, but in other embodiments, the method 1000 can have the sequence of steps 1010 (using external data to initiate payment transaction) and 1020 (initializing) reversed. In those embodiments, the method 1000 can begin with step 1020 (initializing), and then continue to step 1010 (using external data to initiate payment transaction). This is then followed with step 1030 (authenticating and validating).

In this specification, example embodiments have been presented in terms of a selected set of details. However, a person of ordinary skill in the art would understand that many other example embodiments may be practiced which include a different selected set of these details. It is intended that the following claims cover all possible example embodiments.

The various aspects, embodiments, implementations or features of the described embodiments can be used separately or in any combination. Various aspects of the described embodiments can be implemented by software, hardware or a combination of hardware and software.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

## Claims

1. A method for providing a personal point of sale (pPOS) for card present e-commerce transactions and/or in vehicle payments, the method comprising:
presenting a payment and/or identification instrument to a pPOS device;
authenticating and validating, by the pPOS device, a user, a merchant, a merchant acquirer, an issuer of the payment and/or identification instrument,
wherein the authenticating and validating create a trusted link between the pPOS device and each of the following: the user, the merchant, the merchant acquirer, and the issuer of the payment and/or identification instrument;
processing, by the pPOS device, a payment transaction,
wherein a payment kernel is dynamically configured for processing the payment transaction based on the following criteria:
the user, the merchant, the merchant acquirer, a payment network, the payment instrument, and the identification instrument.

2. The method of claim 1, wherein the processing step is comprising of:
payment transaction scoring of the user and the merchant, wherein data elements from the payment transaction, prior payment transaction history, and the payment and/or identification instrument are numerically analyzed by rules to determine a risk of fraud by the user or the merchant.

3. The method of claim 2, wherein the processing step is further comprising of:
EMV chip on chip payment processing, wherein EMV stands for Europay, MasterCard, and Visa.

4. The method of claim 2 or 3, wherein the payment transaction scoring is based on one or more of the following:
shopping usage pattern of the user,
authentication method used by the merchant,
merchant type of the merchant,
usage pattern of the payment and/or identification instrument to the merchant,
success or failure of payment transactions by the issuer of the payment and/or identification instrument,
merchandise type of items in electronic shopping cart, and
shopping cart checkout value and merchant type of the merchant.

5. The method of any preceding claim, wherein the authenticating and validating step is comprising of:
comparing data elements locally stored on the pPOS device with both payment transaction data elements and/or external sensor data elements.

6. The method of claim 5, wherein the data elements are locally stored on the pPOS device, wherein the data elements are comprising of: user identification data elements, merchant identification data elements, and merchant acquirer identification data elements stored in a secure microcontroller function (MCF) and/or a secure element.

7. The method of claim 6, where the user identification data elements are comprising of one or more of the following:
a face of the user,
a finger of the user,
a fingerprint of the user,
an iris of the user,
a voice of the user,
a heart rhythm of the user,
a physical attribute of the user, and
any other biometric identifier of the user.

8. The method of claim 6 or 7, where the merchant identification data elements are comprising of one or more of the following:
a merchant ID (identification),
a merchant key pair,
a merchant address,
a merchant geolocation data,
a merchant store image,
a merchant logo and/or branding and/or trademark image,
a merchant location RF (radio-frequency) and/or UHF (ultra-high frequency) identification,
a merchant electronic shopping cart identification, and
a merchant to user electronic shopping cart session identification.

9. The method of any one of claims 6 to 8, where the merchant acquirer identification data elements are comprising of one or more of the following:
a merchant acquirer ID (identification),
a merchant acquirer key pair,
a merchant acquirer Terminal ID (identification), and
a merchant acquirer connection protocol and identifier.

10. The method of any preceding claim, further comprising:
initializing, by the pPOS device, the payment kernel for processing the payment transaction.

11. The method of claim 10, wherein the initializing step is comprising of:
defining rules and data elements for the payment transaction based on:
whether this is a first time or recurring payment transaction from the same merchant
location of the merchant,
external data, and
the payment and/or identification instrument.

12. The method of claim 11, wherein the data elements for the payment transaction are comprising of one or more of the following:
payment transaction date and time,
payment transaction status, wherein the payment transaction status is comprising of success or failure with reason code,
payment transaction merchant ID (identification), and
payment transaction fraud score.

13. A device for providing a personal point of sale (pPOS) for card present e-commerce transactions and/or in vehicle payments, the device comprising:
a secure microcontroller function (MCF); and
a secure element, the secure element configured to store and process payment and identification application,
wherein a payment kernel configured to process a payment transaction is local, remote, or split between local and remote to the device,
wherein the payment kernel is dynamically configured for processing the payment transaction based on the following criteria:
a user, a merchant, a merchant acquirer, a payment network, a payment instrument, and an identification instrument.

14. The device of claim 13, wherein the payment kernel is configured to support both local and/or remote execution of payment processing based on merchant and merchant acquirer rules.

15. The device of claim 14, further comprising of one or more of the following:
a reader, the reader configured to read the payment and/or identity instrument;
a sensor switch, the sensor switch configured to initiate and/or terminate a payment transaction;
a user interface function; and
an external data sensor switch function, the external data sensor switch function configured to validate, manage, and/or create payment transactions.
